# EUROPÄISCHE PATENTSCHRIFT

(11) **EP 4 375 967 B1**
(45) Veröffentlichungstag und Bekanntmachung des Hinweises auf die Patenterteilung: **16.09.2026**
(21) Anmeldenummer: 23210707.8
(22) Anmeldetag: 17.11.2023
(51) Int. Cl.: G08G 1/00

(54) **VERFAHREN UND STEUERGERÄT ZUM BETREIBEN EINES MOTORRADS IN EINER FORMATION VON MOTORRÄDERN**
METHOD AND CONTROLLER FOR OPERATING A MOTORCYCLE IN A FORMATION OF MOTORCYCLES
PROCÉDÉ ET APPAREIL DE COMMANDE POUR FAIRE FONCTIONNER UNE MOTOCYCLETTE DANS UNE FORMATION DE MOTOCYCLETTES

(30) Priorität: 23.11.2022 DE 102022212489
(43) Veröffentlichungstag der Anmeldung: 29.05.2024
(73) Patentinhaber: Robert Bosch GmbH, 70442 Stuttgart (DE)
(72) Erfinder: Pfau, Lars, Yokohama, 224-0001 (JP); Moriarty, Daniel, Glenroy, 3046 (AU); Bain, Simeon, Montmorency, VIC 3094 (AU)

(56) Entgegenhaltungen:
- JP-A- 2019 160 354
- JP-A- 2019 185 800
- JP-A- 2022 122 300
- US-A1- 2017 270 801
- US-A1- 2019 220 037

## Beschreibung

### Gebiet der Erfindung

Die Erfindung betrifft ein Verfahren zum Betreiben eines Motorrads in einer Formation von Motorrädern, ein entsprechendes Steuergerät sowie ein entsprechendes Computerprogrammprodukt.

### Stand der Technik

Motorradfahrer können als Gruppe in einer Formation fahren. In der Formation fahren die Motorräder versetzt nebeneinander in zwei Reihen. Dabei orientiert sich der einzelne Motorradfahrer im Wesentlichen an dem vor ihm in der Reihe fahrenden Motorrad und an dem schräg vor ihm in der anderen Reihe fahrenden Motorrad.

Der an der Spitze der Formation fahrende Motorradfahrer kann eine Führungsrolle in der Formation einnehmen, da er eine zu fahrende Strecke vorgeben kann. Während er vorweg fährt, kann er den Rest der Formation im Wesentlichen nur über seine Rückspiegel erkennen. Eine Sprechfunkverbindung zu einem oder mehreren Formationsmitgliedern kann dabei den Informationsaustausch vereinfachen. Die Offenbarungen JP 2019 185800 A, JP 2019 160354 A und US 2017/270801 A1 stellen den relevanten Stand der Technik für die vorliegenden Erfindung dar.

### Offenbarung der Erfindung

Vor diesem Hintergrund werden mit dem hier vorgestellten Ansatz ein Verfahren zum Betreiben eines Motorrads in einer Formation von Motorrädern, ein entsprechendes Steuergerät, sowie ein entsprechendes Computerprogrammprodukt gemäß den unabhängigen Ansprüchen vorgestellt. Vorteilhafte Weiterbildungen und Verbesserungen des hier vorgestellten Ansatzes ergeben sich aus der Beschreibung und sind in den abhängigen Ansprüchen beschrieben.

### Vorteile der Erfindung

Bei dem hier vorgestellten Ansatz werden Informationen über hinter einem Motorrad fahrende Fahrzeuge für einen Fahrer des Motorrads bereitgestellt. Insbesondere wird dem Fahrer mitgeteilt, ob ein hinter seinem Motorrad fahrendes Fahrzeug Teil seiner Formation oder ein nicht zur Formation zugehöriges Fremdfahrzeug ist.

Durch den hier vorgestellten Ansatz kann beispielsweise ein Anführer einer Formation von Motorradfahrern Informationen über die hinter ihm fahrende Formation erhalten, ohne kontinuierlich über seine Rückspiegel die Formation beobachten zu müssen.

Es wird ein Verfahren zum Betreiben eines Motorrads in einer Formation von Motorrädern vorgeschlagen, wobei Fahrzeuge in einem Rückraum hinter dem Motorrad erfasst werden und eine Formationszugehörigkeit der erfassten Fahrzeuge zu der Formation bestimmt wird, wobei über eine Mensch-Maschine-Schnittstelle des Motorrads eine Rückrauminformation für einen Fahrer des Motorrads bereitgestellt wird, wobei die Rückrauminformation für zumindest eines der erfassten Fahrzeuge dessen Formationszugehörigkeit abbildet.

Ideen zu Ausführungsformen der vorliegenden Erfindung können unter anderem als auf den nachfolgend beschriebenen Gedanken und Erkenntnissen beruhend angesehen werden.

Ein Fahrzeug kann ein PKW, LKW oder ein Motorrad oder Quad sein. Ein Rückraum kann sich hinter dem Motorrad erstrecken. Der Rückraum kann sich auch rechts und links seitlich hinter dem Motorrad erstrecken. Fahrzeuge hinter dem Motorrad werden erfindungsgemäß unter Verwendung eines nach hinten gerichteten Sensorsystems des Motorrads erfasst. Das Sensorsystem kann zumindest einen Sensor aufweisen, dessen Erfassungsbereich den Rückraum zumindest anteilig abdeckt. Das Sensorsystem kann auch mehrere Sensoren umfassen. Erfassungsbereiche der Sensoren können sich überlappen. Die Sensoren können gleiche oder unterschiedliche Erfassungsprinzipien aufweisen. Beispielsweise kann als Sensor ein Kamerasensor, ein Radarsensor, ein Lidarsensor, ein Ultraschallsensor oder ähnliches eingesetzt werden. Eine Rückrauminformation kann mithilfe des Sensorsystems automatisiert erkannt werden.

Eine Formation von Motorrädern kann aus zumindest zwei Motorrädern bestehen. Die Motorräder der Formation fahren meist auf der gleichen Fahrspur. Dabei fahren die Motorräder mit Längsversatz und einem Seitenversatz beziehungsweise einem longitudinalen und lateralen Versatz zueinander. So ergibt sich das typische Erscheinungsbild der Formation als Zick-Zack-Linie.

Eine andere Formation welche besonders in den USA gefahren wird, sind zwei oder manchmal drei Motorräder nebeneinander auf gleicher Höhe in einer Spur. In manchen Fällen kann es auch vorkommen, dass die Motorräder in einer Reihe fahren.

Ein erfasstes Fahrzeug kann Mitglied der Formation sein oder nicht. Insbesondere können Motorräder Mitglieder der Formation sein. Ob das Fahrzeug Mitglied der Formation ist, kann unter Verwendung eines Erkennungsalgorithmus des Motorrads erkannt werden. Der Erkennungsalgorithmus kann Objektmerkmale der erkannten Fahrzeuge auswerten. Der Erkennungsalgorithmus kann ausgeben, ob das Fahrzeug als zugehörig oder fremd klassifiziert wird. Der Erkennungsalgorithmus kann eine Wahrscheinlichkeit der Formationszugehörigkeit berechnen. Wenn die Wahrscheinlichkeit über einem Schwellenwert liegt, wird das Fahrzeug als zugehörig zur Formation erkannt. Beispielsweise kann der Schwellenwert 50% sein.

Beispielsweise kann ein Bewegungsmuster des Fahrzeugs ausgewertet werden, um zu erkennen, ob das Fahrzeug zur Formation gehört. Bei mehreren Fahrzeugen kann eine relative Anordnung der Fahrzeuge zueinander ausgewertet werden, um die Formationszugehörigkeit zu erkennen. Der Erkennungsalgorithmus kann auf einem Steuergerät des Motorrads ausgeführt werden.

Eine Mensch-Maschine-Schnittstelle kann eine optische, haptische und/oder akustische Schnittstelle sein. Die Mensch-Maschine-Schnittstelle kann Informationen für einen Fahrer des Motorrads bereitstellen. Die Mensch-Maschine-Schnittstelle kann auch Eingaben des Fahrers in elektrische Signale wandeln und für das ausführende Steuergerät bereitstellen.

Die Mensch-Maschine-Schnittstelle kann beispielsweise eine grafische Anzeigeeinrichtung umfassen. Die Mensch-Maschine-Schnittstelle kann Taster und/oder Schalter beziehungsweise Tastflächen und/oder Schaltflächen aufweisen. Die Mensch-Maschine-Schnittstelle kann beispielsweise in ein Head-up-Display oder Cockpit des Motorrads integriert sein. Die Mensch-Maschine-Schnittstelle kann ebenso an einem Lenker des Motorrads angeordnet sein. Dabei können Signalleuchten am Lenker zum Bereitstellen der Rückrauminformation beispielsweise leuchten oder blinken und/oder ihre Farbe wechseln.

Eine Bestätigung oder Ablehnung der Formationszugehörigkeit wird gemäß der Erfindung über die Mensch-Maschine-Schnittstelle eingelesen. Der Fahrer kann so einen durch den Erkennungsalgorithmus erkannten Status eines Fahrzeugs ändern. Wenn der Erkennungsalgorithmus das Fahrzeug fälschlicherweise als zugehörig zur Formation erkennt, kann der Fahrer das Fahrzeug aus der Formation entfernen. Umgekehrt kann der Fahrer ein fälschlicherweise nicht als zugehörig erkanntes Fahrzeug zur Formation hinzufügen.

Die Rückrauminformation kann ferner eine Relativposition des zumindest einen Fahrzeugs zum Motorrad repräsentieren Die Relativposition kann durch Zahlen und/oder Symbole dargestellt werden. Beispielsweise kann eine Seite des Motorrads gekennzeichnet werden, auf der sich das Fahrzeug befindet. Dabei kann unterschieden werden, ob sich das Fahrzeug rechts oder links hinter dem Motorrad befindet. Durch nur zwei Anzeigemöglichkeiten kann die Rückrauminformation schnell und sicher erfasst werden. Ebenso kann das Fahrzeug im Bereich einer vordefinierten Position einer idealisierten Formation angezeigt werden.

Als Rückrauminformation kann auch ein Winkel zwischen einer Längsachse des Motorrads und dem erkannten Fahrzeug und/oder eine Entfernung zwischen dem Motorrad und dem erkannten Fahrzeug abgebildet sein. Der Winkel kann beispielsweise als Winkelabschnitt beziehungsweise Sektor oder Pfeil mit einer entsprechenden Richtung dargestellt werden. Die Entfernung kann als Zahlenwert dargestellt werden. Die Entfernung kann ebenso als Länge des den Winkel darstellenden Symbols dargestellt werden.

Die Rückrauminformation kann ansprechend auf eine über die Mensch-Maschine-Schnittstelle eingelesene Anforderung des Fahrers bereitgestellt werden. Die Rückrauminformation kann normalerweise nicht bereitgestellt werden, um den Fahrer nicht abzulenken. Die Rückrauminformation kann bereitgestellt werden, wenn der Fahrer diese Information erhalten will. Die Rückrauminformation kann auch nur in vorbestimmten Fahrsituationen bereitgestellt werden. Beispielsweise kann die Rückrauminformation unterhalb einer vorbestimmten Geschwindigkeit bereitgestellt werden. Eingaben des Fahrers über die Mensch-Maschine-Schnittstelle können auch im Stand, beispielsweise an einer Ampel, erfolgen.

Die Formationszugehörigkeit kann unter Verwendung einer Farbcodierung abgebildet werden. Ein zur Formation zugehöriges Fahrzeug kann durch eine andere Farbe und/oder ein anderes oder verändertes Symbol repräsentiert werden als ein nicht zur Formation zugehöriges Fahrzeug.

Das Verfahren ist vorzugsweise computerimplementiert und kann beispielsweise in Software oder Hardware oder in einer Mischform aus Software und Hardware beispielsweise in einem Fahrerassistenzsystem implementiert sein.

Der hier vorgestellte Ansatz schafft ferner ein Steuergerät in Form eines Fahrerassistenzsystems für ein Fahrzeug, wobei das Fahrerassistenzsystem dazu ausgebildet ist, um die Schritte einer Variante des hier vorgestellten Verfahrens in entsprechenden Einrichtungen durchzuführen, anzusteuern bzw. umzusetzen.

Das Steuergerät bzw. Fahrerassistenzsystem kann ein elektrisches Gerät mit zumindest einer Recheneinheit zum Verarbeiten von Signalen oder Daten, zumindest einer Speichereinheit zum Speichern von Signalen oder Daten, und zumindest einer Schnittstelle und/oder einer Kommunikationsschnittstelle zum Einlesen oder Ausgeben von Daten, die in ein Kommunikationsprotokoll eingebettet sind, sein. Die Recheneinheit kann beispielsweise ein Signalprozessor, ein sogenannter System-ASIC oder ein Mikrocontroller zum Verarbeiten von Sensorsignalen und Ausgeben von Datensignalen in Abhängigkeit von den Sensorsignalen sein. Die Speichereinheit kann beispielsweise ein Flash-Speicher, ein EPROM oder eine magnetische Speichereinheit sein. Die Schnittstelle kann als Sensorschnittstelle zum Einlesen der Sensorsignale von einem Sensor und/oder als Aktorschnittstelle zum Ausgeben der Datensignale und/oder Steuersignale an einen Aktor ausgebildet sein. Die Kommunikationsschnittstelle kann dazu ausgebildet sein, die Daten drahtlos und/oder leitungsgebunden einzulesen oder auszugeben. Die Schnittstellen können auch Softwaremodule sein, die beispielsweise auf einem Mikrocontroller neben anderen Softwaremodulen vorhanden sind.

Von Vorteil ist auch ein Computerprogrammprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann und zur Durchführung, Umsetzung und/oder Ansteuerung der Schritte des Verfahrens nach einer der vorstehend beschriebenen Ausführungsformen verwendet wird, insbesondere wenn das Programmprodukt oder Programm auf einem Computer oder einer Vorrichtung ausgeführt wird.

Es wird darauf hingewiesen, dass einige der möglichen Merkmale und Vorteile der Erfindung hierin mit Bezug auf unterschiedliche Ausführungsformen beschrieben sind. Ein Fachmann erkennt, dass die Merkmale des Steuergeräts und des Verfahrens in geeigneter Weise kombiniert, angepasst oder ausgetauscht werden können, um zu weiteren Ausführungsformen der Erfindung zu gelangen.

### Kurze Beschreibung der Zeichnungen

Nachfolgend werden Ausführungsformen der Erfindung unter Bezugnahme auf die beigefügten Zeichnungen beschrieben, wobei weder die Zeichnungen noch die Beschreibung als die Erfindung einschränkend auszulegen sind.
Fig. 1 zeigt eine grafische Darstellung einer Rückrauminformation zur Verwendung in einem Verfahren gemäß einem Ausführungsbeispiel;
Fig. 2 zeigt eine Darstellung einer vereinfachten Rückrauminformation zur Verwendung in einem Verfahren gemäß einem Ausführungsbeispiel;
Fig. 3 zeigt eine alternative Darstellung einer Rückrauminformation zur Verwendung in einem Verfahren gemäß einem Ausführungsbeispiel; und
Fig. 4 zeigt eine Darstellung einer am Lenker dargestellten Rückrauminformation zur Verwendung in einem Verfahren gemäß einem Ausführungsbeispiel.

Die Figuren sind lediglich schematisch und nicht maßstabsgetreu. Gleiche Bezugszeichen bezeichnen gleiche oder gleichwirkende Merkmale.

### Ausführungsformen der Erfindung

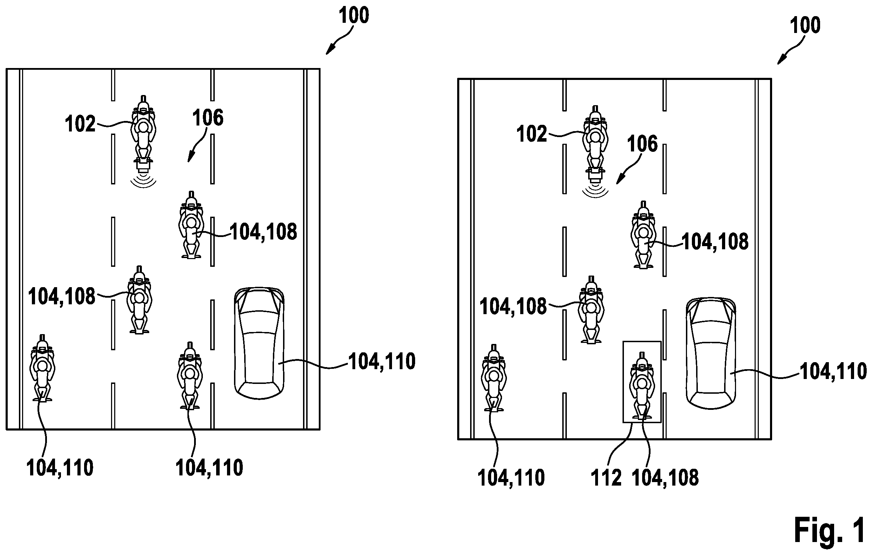

Fig. 1 zeigt eine grafische Darstellung einer Rückrauminformation 100 zur Verwendung in einem Verfahren gemäß einem Ausführungsbeispiel. Die Rückrauminformation 100 ist als Vogelperspektive auf einen von einem Motorrad 102 befahrenen Straßenabschnitt dargestellt. Die Rückrauminformation 100 wird einem Fahrer des Motorrads 102 über eine Mensch-Maschine-Schnittstelle bereitgestellt. Die Rückrauminformation 100 kann beispielsweise auf einem Bildschirm oder einem Head-up-Display des Motorrads 102 eingeblendet werden.

In der Rückrauminformation 100 sind Fahrzeuge 104 abgebildet, die in einem Rückraum hinter dem Motorrad 100 durch ein Sensorsystem des Motorrads 102 erfasst worden sind. Einige der Fahrzeuge 104 gehören zu einer Formation 106 des Motorrads 102. Hier sind vier weitere Motorräder und ein PKW hinter dem Motorrad 102 dargestellt. drei der Motorräder befahren die gleiche Fahrspur wie das Motorrad 102. Ein weiteres Motorrad befährt eine benachbarte Spur und der PKW befährt eine weitere benachbarte Spur.

Ein Erkennungsalgorithmus des Motorrads 102 hat den erfassten Fahrzeugen 104 jeweils eine Formationszugehörigkeit zu der Formation 106 zugewiesen. Die Formationszugehörigkeit ist in der Rückrauminformation 100 durch eine Farbcodierung der Fahrzeuge 104 abgebildet. Als zu der Formation zugehörig 108 sind zwei der auf derselben Spur fahrenden Motorräder gekennzeichnet. Das auf der benachbarten Spur fahrende Motorrad und der PKW sind als zu der Formation nicht zugehörig 110 gekennzeichnet.

In einem Ausführungsbeispiel kann ein Fahrer des Motorrads 102 den Status der dargestellten Fahrzeuge 104 ändern. Dazu wählt er das gewünschte Fahrzeug 104 über ein Bedienelement des Motorrads 102 aus. Das ausgewählte Fahrzeug 104 wird dadurch durch eine Hervorhebung 112 hervorgehoben. Über eine Eingabe auf dem Bedienelement kann der Fahrer nun die Formationszugehörigkeit ändern.

Hier ist das dritte Motorrad auf der Spur des Motorrads 102 fälschlicherweise als nicht zugehörig 110 gekennzeichnet. Daher hat der Fahrer dieses Motorrad ausgewählt und kann nun die Formationszugehörigkeit auf zugehörig 108 setzen.

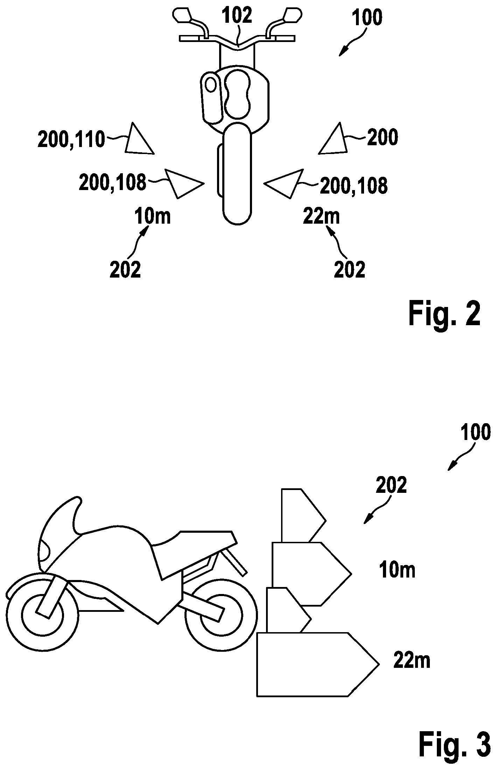

Fig. 2 zeigt eine Darstellung einer vereinfachten Rückrauminformation 100 gemäß einem Ausführungsbeispiel. Hier ist das Motorrad 102 mit vier vordefinierten Richtungszeigern 200 in Form von Dreiecken dargestellt. Die vier Richtungszeiger 200 repräsentieren dabei je zwei Winkelbereiche rechts und links hinter dem Motorrad 102. Eine Basis des jeweiligen Dreiecks weist zum Motorrad und eine Spitze des Dreiecks weist in die Richtung Winkelbereichs. Die Richtungszeiger 200 bilden über ihre Farbe das Vorhandensein eines Fahrzeugs in diesem Winkelbereich sowie die Formationszugehörigkeit ab.

Hier werden von zwei der Richtungsanzeiger 200 je ein Fahrzeug als zugehörig 108 angezeigt. Die Richtungsanzeiger zu den zugehörigen Fahrzeugen sind in blau dargestellt. Einer der Richtungsanzeiger 200 zeigt ein nicht zugehöriges 110 Fahrzeug. Der Richtungsanzeiger 200 zu dem nicht zugehörigen Fahrzeug ist in grün dargestellt. Der vierte Richtungsanzeiger 200 zeigt kein Fahrzeug an. Dieser Richtungsanzeiger 200 ist grau dargestellt.

In einem Ausführungsbeispiel wird als die Rückrauminformation 100 ferner eine Entfernungsangabe 202 unterhalb der Richtungsanzeiger 200 zu den zugehörigen Fahrzeugen dargestellt. Die Entfernungsangabe 202 ist dabei ein Zahlenwert. Hier ist das rechte zugehörige Fahrzeug 22 Meter entfernt. Das linke zugehörige Fahrzeug ist 10 Meter entfernt.

Fig. 3 zeigt eine alternative Darstellung einer Rückrauminformation 100 gemäß einem Ausführungsbeispiel. Die Darstellung entspricht im Wesentlichen der Darstellung in Fig. 2. Im Gegensatz dazu sind hier nur Entfernungsangaben 202 und keine Richtungsanzeiger dargestellt. Dabei sind die Entfernungsangaben 202 in Form von Pfeilen dargestellt. Eine Länge der Pfeile korrespondiert zu der Entfernungsangabe 202. Wie in Fig. 3 wird die Formationszugehörigkeit durch die Farbe des Pfeils angezeigt. Die Entfernung zu einem zugehörigen 108 Fahrzeug wird durch einen blauen Pfeil dargestellt.

In einem Ausführungsbeispiel sind wie in Fig. 2 die Entfernungsangaben 202 zusätzlich als Zahlenwerte dargestellt. Wie in Fig. 2 werden zwei zugehörige Fahrzeuge in 10 und 22 Metern Entfernung angezeigt.

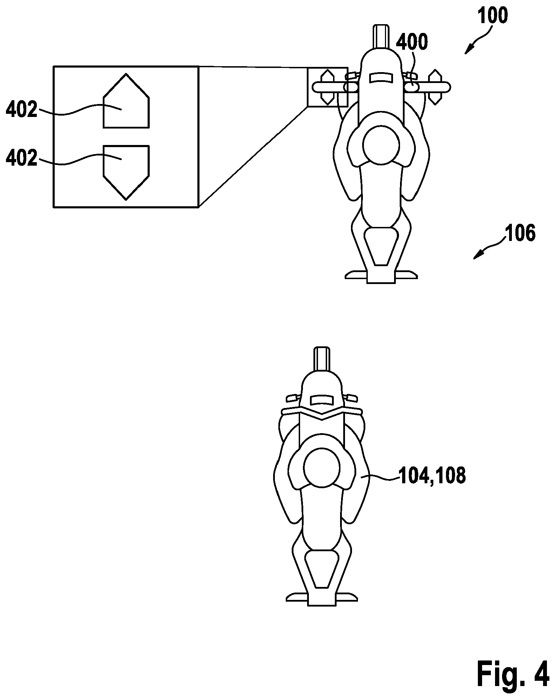

Fig. 4 zeigt eine Darstellung einer am Lenker 400 dargestellten Rückrauminformation 100 gemäß einem Ausführungsbeispiel. Zur Darstellung der Rückrauminformation 100 weist der Lenker 400 als Mensch-Maschine-Schnittstelle rechts und links zumindest je eine beleuchtete Taste 402 auf. Die Taste 402 kann dabei in unterschiedlichen Farben beleuchtet werden. Die Farben repräsentieren wie in den Figuren 2 und 3 eine Farbcodierung. Hier wird die Rückrauminformation 100 über die rechte Taste 402 bereitgestellt, wenn ein Fahrzeug 104 rechts hinter dem Motorrad 102 erkannt wird. Entsprechend wird die Rückrauminformation 100 über die linke Taste 402 bereitgestellt, wenn links hinter dem Motorrad 102 ein Fahrzeug 104 erkannt wird. Hier ist das Fahrzeug 104 links hinter dem Motorrad 102 und als ein zur Formation 106 zugehöriges Fahrzeug 108 klassifiziert. Dementsprechend wird die linke Taste 402 hier in blau beleuchtet.

In einem Ausführungsbeispiel sind auf jeder Seite des Lenkers 400 zwei Tasten 402 als Schaltwippe angeordnet. So kann der Fahrer über die Tasten den Status des angezeigten Fahrzeugs 104 ändern oder bestätigen. Zum Ändern des Status ist ein langer Druck auf eine der Tasten erforderlich. Dann wechselt die Mensch-Maschine-Schnittstelle in einen Änderungsmodus und signalisiert dies über einen Farbwechsel an. Hier wechselt eine der Tasten 402 nach gelb. Dann kann durch Tastendruck der Status eingestellt werden. Durch einen erneuten langen Druck auf eine der Tasten 402 wird der Statuswechsel bestätigt und wieder in einen Anzeigemodus gewechselt.

Nachfolgend werden mögliche Ausgestaltungen der Erfindung nochmals zusammengefasst bzw. mit einer geringfügig anderen Wortwahl dargestellt.

Es wird eine hintere Objektauswahl für Zweiradfahrzeuge während der Gruppenfahrt vorgestellt.

Der hier vorgestellte Ansatz kann für eine Gruppenfahrfunktion (GRA) für Zweiradfahrzeuge verwendet werden. Der Zweck ist eine Fahrerauswahl und die Kennzeichnung von hinteren Objekten als Mitglieder/Teil einer Gruppenfahrformation. Der vorgestellte Ansatz verbessert das Verständnis des Fahrers für die Fahrformation und die Welt, indem sie eine Interaktion des Fahrers mit einem hinteren Sensor zur Verbesserung des Fahrerlebnisses ermöglicht. Insbesondere kann der Fahrer dabei helfen, hintere Objekte auszuwählen oder abzuwählen, wenn ein Fahrer in einer Kolonne mit hinteren Objekten fährt, z. B. während eines Gruppenfahrmodus.

Zum Ausführen des hier vorgestellten Ansatzes verfügt das Zweirad über einen oder mehrere nach hinten gerichtete Sensoren zur Erkennung von Objekten hinter dem Zweirad, ein Modul zur Erkennung von Gruppenfahrten unter Verwendung des hinteren Sensors und eine Mensch-Maschine-Schnittstelle, die eine Interaktion mit dem hinteren Sensor ermöglicht, um das Fahrerlebnis zu verbessern, insbesondere wenn ein Fahrer in einer Kolonne fährt, die hintere Objekte als Teil der Kolonne hat (z. B. im Gruppenfahrmodus).

Die Mensch-Maschine-Schnittstelle bietet die Möglichkeit, die Auswahl, Bestätigung und Anzeige von Fahrzeugen der hinteren Formation zu koordinieren. Die Mensch-Maschine-Schnittstelle ermöglicht die Anzeige von hinteren Formationsfahrzeugen und/oder Nicht-Formationsfahrzeugen und deren Attribute, damit der Fahrer diese als Objekte in oder außerhalb der Formation auswählen oder einstellen kann. Die Mensch-Maschine-Schnittstelle ermöglicht dem Fahrer außerdem die Auswahl und Abwahl von Objekten in der Kolonne und aktiviert/deaktiviert die Auswahlmethode, z. B. die automatische Auswahl durch den Sensor oder die manuelle Auswahl durch den Fahrer.

Das Modul zur Erkennung von Gruppenfahrten wird durch den hinteren Sensor oder anderweitig bereitgestellt. Das Modul zur Erkennung von Gruppenfahrten erkennt automatisch hintere Objekte, von denen es annimmt, dass sie Teil einer Formation sind, und gibt diese Informationen an die Mensch-Maschine-Schnittstelle weiter. Es kennzeichnet das Objekt auch und speichert es im System, so dass andere bordeigene oder angeschlossene Motorradsysteme ebenfalls wissen können, dass dieses Objekt Teil der Fahr-Formation ist. Die Mensch-Maschine-Schnittstelle zeigt dem Fahrer dann einen Hinweis an, so dass er die aktuelle Beschaffenheit der Objekte und der Kolonne verstehen kann.

Bei dem hier vorgestellten Ansatz wird dem Fahrer angezeigt, dass es ein oder mehrere hintere Objekte gibt, die zu der Kolonne (Formation) gehören. Es werden Angaben zum Standort, zu den physikalischen Eigenschaften, zum Status und/oder zur allgemeinen Beschaffenheit eines oder mehrerer aktuell ausgewählter und/oder aktuell nicht ausgewählter Objekte angezeigt. Alternativ oder ergänzend werden auch Angaben zu Status, Art, Konfiguration und/oder allgemeiner Beschaffenheit der Kolonne angezeigt.

Die automatische Auswahl bzw. Abwahl von Objekten für die Anzeige kann unterschiedlich ausgestaltet sein.

In einem Ausführungsbeispiel wird ein hinteres Objekt automatisch vom Sensor ausgewählt, und dieses Objekt (oder Details des Objekts) wird für den Fahrer entweder dauerhaft oder nicht dauerhaft angezeigt. Es wird aus der Anzeige entfernt oder geändert, wenn der Sensor feststellt, dass es nicht mehr Teil der Kolonne ist. Und hinzugefügt/geändert, wenn der Sensor feststellt, dass es dazugehört.

Ein Objekt kann automatisch abgewählt werden, wenn es sich aus dem Sichtfeld des Sensors herausbewegt oder die Wahrscheinlichkeit, dass es existiert, unter einen bestimmten Schwellenwert fällt. Das Objekt kann auch automatisch abgewählt werden, wenn sich das Objekt aus einem vorgegebenen Bereich oder einer Entfernungseinstellung herausbewegt (oder dies vorhergesagt wird). Das Objekt kann auch automatisch abgewählt werden, wenn der Erkennungsalgorithmus feststellt, dass die Wahrscheinlichkeit, dass das Objekt Teil einer Kolonne ist, auf der Grundlage von Formationserkennungskriterien unter einen Schwellenwert gefallen ist. Das Objekt kann auch automatisch abgewählt werden, wenn eine externe Bedingung die Situation oder den Fahrmodus unterbricht, z. B., wenn eine Sensorfehlerbedingung aktiv ist, sich die Fahrsituation ändert, das Fahrzeug unter eine bestimmte Geschwindigkeit fällt, der Motor abgestellt wird usw.

In umgekehrter Richtung können diese Kriterien für eine automatische Auswahl verwendet werden.

In einem weiteren Ausführungsbeispiel wird ein hinteres Objekt automatisch vom Sensor ausgewählt und wie im ersten Ausführungsbeispiel angezeigt. Dann wird eine Eingabe vom Fahrer abgefragt, um ein automatisch ausgewähltes oder abgewähltes hinteres Objekt als Teil der Kolonne zu bestätigen oder abzulehnen.

Die Auswahl oder Abwahl von Objekten für die Anzeige kann auch manuell erfolgen. Bei der manuellen Auswahl werden die hinteren Objekte vom Sensor erkannt und wie im ersten Ausführungsbeispiel angezeigt, entweder dauerhaft oder erst auf Anforderung des Fahrers. Der Fahrer, der dann manuell auswählen möchte, welche(s) Objekt(e) zur Kolonne gehört/gehören, gibt Eingaben in die Mensch-Maschine-Schnittstelle ein, um die Objekte, die zur Kolonne gehören, auszuwählen und anschließend zu bestätigen. Der Fahrer kann den Vorgang jederzeit wiederholen, um weitere Objekte hinzuzufügen, Objekte zu entfernen oder den Status von Objekten oder der Kolonne zu ändern.

Die Informationen über die bestätigte Gruppenfahrt werden an andere Systeme auf dem Motorrad übertragen, z. B. über CAN, da diese Informationen für andere Systeme auf dem Motorrad nützlich sein können.

In Abb. 1 werden die Objekte in der Vogelperspektive angezeigt, und der Fahrer wählt das Objekt aus, das er einstellen möchte. Dabei werden auch nicht in der Kolonne befindliche Objekte angezeigt. Der Fahrer kann das Objekt über Mensch-Maschine-Schnittstelle auswählen. Objekte in der Kolonne können auch automatisch durch das System ausgewählt werden.

In Abb. 2 ist eine alternative Anzeige- und Auswahlstrategie für die Mensch-Maschine-Schnittstelle mit Pfeilindikatoren dargestellt, die ihre Farbe oder ihren Typ ändern, je nachdem, ob ein markiertes (Informations-)Objekt in dieser Richtung existiert und wie weit es entfernt ist.

In Abb. 3 ist eine weitere Anzeige- und Auswahlstrategie für die Mensch-Maschine-Schnittstelle mit Balken dargestellt, die ihre Farbe ändern, wenn ein Objekt in einem bestimmten seitlichen Bereich erkannt wird. Die Balken schrumpfen oder wachsen in Abhängigkeit vom Längsabstand des Objekts zum Motorrad.

In Abb. 4 ist eine auf Tasten/LEDs basierende Mensch-Maschine-Schnittstelle dargestellt. Dieser Ansatz kann auch mit virtuellen Tasten oder Kontrollleuchten auf einem Head-up-Display ausgeführt werden. Dabei zeigt eine Farbe und/oder ein Blinken einer Taste den Status eines Objekts auf dieser Seite an, um dem Fahrer Informationen zum Objekt/Status zu geben. Zum Beispiel blinkt die nach hinten gerichtete Taste, um den Fahrer darauf hinzuweisen, dass das Objekt ausgewählt wird. Der Fahrer drückt lange auf die Taste, um abzubrechen.

Abschließend ist darauf hinzuweisen, dass Begriffe wie "aufweisend", "umfassend", etc. keine anderen Elemente oder Schritte ausschließen und Begriffe wie "eine" oder "ein" keine Vielzahl ausschließen. Bezugszeichen in den Ansprüchen sind nicht als Einschränkung anzusehen.

## Patentansprüche

1. Verfahren zum Betreiben eines Motorrads (102) in einer Formation (106) von Motorrädern, wobei Fahrzeuge (104) in einem Rückraum hinter dem Motorrad (102) erfasst werden und eine Formationszugehörigkeit der erfassten Fahrzeuge (104) zu der Formation (106) bestimmt wird, wobei über eine Mensch-Maschine-Schnittstelle des Motorrads (102) eine Rückrauminformation (100) für einen Fahrer des Motorrads (102) bereitgestellt wird, wobei die Rückrauminformation (100) für zumindest eines der erfassten Fahrzeuge (104) dessen Formationszugehörigkeit abbildet, **dadurch gekennzeichnet, dass** die Rückrauminformation mithilfe eines nach hinten gerichteten Sensorsystems des Motorrads automatisiert erkannt wird, wobei eine Bestätigung oder Ablehnung der Formationszugehörigkeit über die Mensch-Maschine-Schnittstelle eingelesen wird.

2. Verfahren gemäß einem der vorhergehenden Ansprüche, bei dem die Rückrauminformation (100) ferner eine Relativposition des zumindest einen Fahrzeugs (104) zum Motorrad (102) repräsentiert.

3. Verfahren gemäß Anspruch 2, bei dem als Relativposition eine Seite des Motorrads (102) gekennzeichnet wird, auf der sich das Fahrzeug (104) befindet.

4. Verfahren gemäß einem der Ansprüche 2 bis 3 bei dem als Relativposition eine Entfernung zu dem Fahrzeug (104) angezeigt wird.

5. Verfahren gemäß einem der vorhergehenden Ansprüche, bei dem die Rückrauminformation (100) ansprechend auf eine über die Mensch-Maschine-Schnittstelle eingelesene Anforderung des Fahrers bereitgestellt wird.

6. Verfahren gemäß einem der vorhergehenden Ansprüche, bei dem die Formationszugehörigkeit unter Verwendung einer Farbcodierung und/oder eines veränderten Symbols abgebildet wird.

7. Steuergerät, wobei das Steuergerät dazu konfiguriert ist, das Verfahren gemäß einem der vorhergehenden Ansprüche in entsprechenden Einrichtungen auszuführen, umzusetzen und/oder anzusteuern.

8. Computerprogrammprodukt, das dazu eingerichtet ist, einen Prozessor bei Ausführung des Computerprogrammprodukts dazu anzuleiten, das Verfahren gemäß einem der Ansprüche 1 bis 6 auszuführen, umzusetzen und/oder anzusteuern.

9. Maschinenlesbares Speichermedium, auf dem das Computerprogrammprodukt gemäß Anspruch 8 gespeichert ist.

## Claims

1. Method for operating a motorcycle (102) in a formation (106) of motorcycles, wherein vehicles (104) are detected in a rear area behind the motorcycle (102) and a formation association of the detected vehicles (104) with the formation (106) is determined, wherein rear area information (100) is provided for a rider of the motorcycle (102) via a man-machine interface of the motorcycle (102), wherein the rear area information (100) for at least one of the detected vehicles (104) depicts its formation association, **characterized in that** the rear area information is identified in an automated manner by means of a rearward-facing sensor system of the motorcycle, wherein a confirmation or rejection of the formation association is read in via the man-machine interface.

2. Method according to one of the preceding claims, in which the rear area information (100) further represents a relative position of the at least one vehicle (104) with respect to the motorcycle (102).

3. Method according to Claim 2, in which a side of the motorcycle (102) on which the vehicle (104) is located is characterized as a relative position.

4. Method according to either of Claims 2 and 3, in which a distance from the vehicle (104) is indicated as a relative position.

5. Method according to one of the preceding claims, in which the rear area information (100) is provided in response to a request of the rider read in via the man-machine interface.

6. Method according to one of the preceding claims, in which the formation association is depicted using a colour coding and/or a modified symbol.

7. Control unit, wherein the control unit is configured to carry out, implement and/or control the method according to one of the preceding claims in corresponding devices.

8. Computer program product which is configured to instruct a processor to carry out, implement and/or control the method according to one of Claims 1 to 6 when executing the computer program product.

9. Machine-readable storage medium on which the computer program product according to Claim 8 is stored.

## Revendications

1. Procédé pour faire fonctionner une motocyclette (102) dans une formation (106) de motocyclettes, dans lequel des véhicules (104) sont détectés dans un espace arrière derrière la motocyclette (102) et une appartenance à la formation des véhicules détectés (104) vis-à-vis de la formation (106) est déterminée, dans lequel une information d'espace arrière (100) est fournie à un conducteur de la motocyclette (102) via une interface homme-machine de la motocyclette (102), dans lequel l'information d'espace arrière (100) pour au moins un des véhicules détectés (104) reproduit son appartenance à la formation, **caractérisé en ce que** l'information d'espace arrière est détectée de manière automatisée à l'aide d'un système de détection orienté vers l'arrière de la motocyclette, une confirmation ou un rejet de l'appartenance à la formation étant lu via l'interface homme-machine.

2. Procédé selon l'une quelconque des revendications précédentes, dans lequel l'information d'espace arrière (100) représente en outre une position relative de l'au moins un véhicule (104) par rapport à la motocyclette (102).

3. Procédé selon la revendication 2, dans lequel un côté de la motocyclette (102) sur lequel se trouve le véhicule (104) est identifié en tant que position relative.

4. Procédé selon l'une quelconque des revendications 2 à 3, dans lequel une distance par rapport au véhicule (104) est affichée en tant que position relative.

5. Procédé selon l'une quelconque des revendications précédentes, dans lequel l'information d'espace arrière (100) est fournie en réponse à une demande du conducteur lue via l'interface homme-machine.

6. Procédé selon l'une quelconque des revendications précédentes, dans lequel l'appartenance à la formation est reproduite en utilisant un codage couleur et/ou un symbole modifié.

7. Appareil de commande, l'appareil de commande étant configuré pour exécuter, mettre en œuvre et/ou commander le procédé selon l'une quelconque des revendications précédentes dans des dispositifs correspondants.

8. Produit de programme d'ordinateur conçu pour amener un processeur, lors de l'exécution du produit de programme d'ordinateur, à exécuter, mettre en œuvre et/ou commander le procédé selon l'une quelconque des revendications 1 à 6.

9. Support de stockage lisible par machine sur lequel est stocké le produit de programme d'ordinateur selon la revendication 8.
